# EUROPÄISCHE PATENTSCHRIFT

(11) **EP 0 643 087 B1**
(45) Veröffentlichungstag und Bekanntmachung des Hinweises auf die Patenterteilung: **01.04.1998**
(21) Anmeldenummer: 94113851.3
(22) Anmeldetag: 03.09.1994
(51) Int. Cl.: C08G 18/79, C07D 229/00, C07D 251/34

(54) **Verfahren zur Herstellung von Isocyanurat- und Uretdiongruppen enthaltenden Polyisocyanatmischungen mit reduzierter Farbzahl**
Process for producing isocyanurate and uretdione groups containing polyisocyanate mixtures with low colour values
Procédé de fabrication de mélanges de polyisocyanates à basse valeur de couleur contenant des groupes isocyanurate et uretdione

(30) Priorität: 13.09.1993 DE 4331084
(43) Veröffentlichungstag der Anmeldung: 15.03.1995
(73) Patentinhaber: BASF Aktiengesellschaft, 67063 Ludwigshafen (DE)
(72) Erfinder: Bruchmann, Bernd, Dr., D-67069 Ludwigshafen (DE); Wolff, Stefan, Dr., D-67117 Limburgerhof (DE); Laqua, Gerhard, Dr., D-68167 Mannheim (DE)

(56) Entgegenhaltungen:
- EP-A- 0 379 914
- DE-A- 3 806 276
- DE-A- 4 215 760

## Beschreibung

Gegenstand der Erfindung ist ein Verfahren zur Herstellung von Isocyanurat- und Uretdiongruppen enthaltenden Polyisocyanatmischungen mit reduzierter Farbzahl bei welchem in einer ersten Verfahrensstufe aliphatische und/oder cycloaliphatische Diisocyanate durch thermische Spaltung der entsprechenden Carbamate erzeugt werden und diese in einer zweiten Verfahrensstufe durch katalytische Oligomerisierung und anschließende Entfernung der nicht umgesetzten Diisocyanate zu den Isocyanurat- und Uretdiongruppen enthaltenden Polyisocyanatmischungen umgesetzt werden. Gegenstand der Erfindung sind weiterhin die nach diesem Verfahren hergestellten Produkte.

Für hochwertige Ein- und Zweikomponenten Polyurethanlacke mit hoher Licht- und Wetterbeständigkeit werden als Isocyanatkomponente insbesondere Isocyanurat- und Uretdiongruppen enthaltende Polyisocyanatmischungen eingesetzt.

Die Herstellung dieser Produkte erfolgt vorzugsweise durch katalytische Oligomerisierung von aliphatischen und/oder cycloaliphatischen Diisocyanaten, z.B. 1-Isocyanato-3,3,5-trimethyl-5-isocyanatomethylcyclohexan (IPDI) oder 1,6-Diisocyanatohexan (HDI).

Als Katalysatoren können beispielsweise Hydroxide oder organische Salze von schwachen Säuren mit Tetraalkylammonium-Gruppen, Hydroxide oder organische Salze von schwachen Säuren mit Hydroxyalkylammonium-Gruppen, Alkalimetallsalze oder Zinn-, Zink- bzw. Bleisalze von Alkylcarbonsäuren eingesetzt werden.

Hierbei läßt man die aliphatischen und/oder cycloaliphatischen Diisocyanate in Gegenwart des Katalysators, gegebenenfalls unter Verwendung von Lösungsmitteln und/oder Hilfsstoffen, bis zum Erreichen des gewünschten Umsatzes reagieren. Danach wird die Reaktion durch Desaktivierung des Katalysators abgebrochen und das überschüssige monomere Diisocyanat abdestilliert. Je nach dem verwendeten Katalysatortyp und der Reaktionstemperatur erhält man Polyisocyanate mit unterschiedlichen Anteilen an Isocyanurat-bzw. Uretdiongruppen.

Die so hergestellten Produkte sind meist klare, aber in Abhängigkeit vom Katalysatortyp, der Diisocyanatqualität, der Reaktionstemperatur und der Reaktionsfahrweise mehr oder weniger stark gelbgefärbte Produkte.

Für die Herstellung hochwertiger Polyurethanlacke sind jedoch Produkte mit einer möglichst niedrigen Farbzahl erwünscht. Aus dem Stand der Technik sind eine Reihe von Verfahren zur Farbzahlsenkung derartiger Produkte bekannt.

So wird in der EP-A-0 339 396 zur Herstellung von Isocyanuraten mit reduzierter Farbzahl der Einsatz von quaternären Ammoniumfluoriden als Trimerisierungskatalysatoren vorgeschlagen. Dieser Katalysatortyp muß jedoch chemisch desaktiviert werden. Die dabei resultierenden Verbindungen verbleiben im Produkt und können zu anwendungstechnischen Problemen bei der Weiterverarbeitung führen.

Eine weitere Möglichkeit zur Herstellung von Isocyanuratgruppen enthaltenden Polyisocyanaten mit niedrigerer Farbzahl besteht in dem in der EP-A-0 336 205 vorgeschlagenen Zusatz von Polyesterdiolen zum Ausgangsdiisocyanat. Dadurch kann der Katalysatoreinsatz reduziert werden; die resultierenden Produkte sind jedoch immer noch relativ stark gefärbt.

In der EP-A-0 377 177 wird das aliphatische Diisocyanat in Gegenwart von Phosphinen als Katalysator oligomerisiert, nach Abbruch der Oligomerisierung wird das nicht umgesetzte Diisocyanat zum Teil abdestilliert, zum Teil durch Zusatz von Alkohol in Urethan umgewandelt. Anschließend wird das Reaktionsprodukt mit Peroxiden behandelt. Durch die Peroxidbehandlung kommt es zwar zu einer Senkung der Farbzahl des Oligomerisierungsprodukts, der Einsatz von Peroxiden ist jedoch oftmals mit Problemen verbunden. So sind Peroxide technisch schwer zu handhaben. Handhabungssicherere Peroxide werden meist in Lösung angeboten, wobei dann das häufig als Lösungsmittel verwendete Dibutylphthalat bei der Lackherstellung zu anwendungstechnischen Problemen führt.

In der DE-A-38 06 276 wird ein Verfahren zur Herstellung von Polyisocyanaten durch Isocyanuratisierung von Hexamethylendiisocyanat beschrieben. Dabei wird zur Senkung der Farbzahl eine Verminderung des Kohlendioxidgehaltes des eingesetzten Diisocyanat-Monomeren auf Werte kleiner 20 ppm, vorzugsweise kleiner 10 ppm, gefordert. Die Entfernung des Kohlendioxids aus dem Diisocyanat erfolgt dabei vorzugsweise durch Ausblasen mit trokkenem, reinem Stickstoff. Durch diesen zusätzlichen Verfahrensschritt sinkt die Wirtschaftlichkeit des Oligomerisierungsverfahrens.

Die Aufgabe der Erfindung bestand darin, ein einfaches Verfahren zur Herstellung von Isocyanurat- und Uretdiongruppen enthaltenden Polyisocyanaten zu entwickeln, das die Nachteile des Standes der Technik vermeidet.

Es wurde nun überraschenderweise gefunden, daß die Aufgabe gelöst werden konnte durch ein Verfahren zur Herstellung von Isocyanurat- und Uretdiongruppen enthaltenden Polyisocyanaten, bei welchem man in einer ersten Verfahrensstufe aliphatische und/oder cycloaliphatische Diisocyanate durch thermische Spaltung der entsprechenden Carbamate erzeugt und in einem zweiten Verfahrensschritt diese Diisocyanate in Gegenwart von Kohlendioxid in einer Menge von 20 bis 500 ppm durch katalytische Oligomerisierung und nachfolgende Entfernung der nichtumgesetzten monomeren Diisocyanate zu Isocyanurat- und Uretdiongruppen enthaltenden Polyisocyanaten umsetzt.

Gegenstand der Erfindung ist demzufolge ein Verfahren zur Herstellung von Isocyanurat- und Uretdiongruppen enthaltenden Polyisocyanaten, bei welchem man in einer ersten Verfahrensstufe aliphatische und/oder cycloaliphatische Diisocyanate durch thermische Spaltung der entsprechenden Carbamate erzeugt und in einem zweiten Verfahrensschritt diese Diisocyanate in Gegenwart von Kohlendioxid in einer Menge von 20 bis 500 ppm durch katalytische Oligomerisierung und nachfolgende Entfernung der nichtumgesetzten monomeren Diisocyanate zu Isocyanurat- und Uretdiongruppen enthaltenden Polyisocyanaten umsetzt.

Die Verwendung derartiger Produkte erfolgt insbesondere als Isocyanatkomponente in Polyurethan-Ein- oder Zweikomponenten-Lacken.

Als Ausgangsdiisocyanate des erfindungsgemäßen Verfahrens werden aliphatische und/oder cycloaliphatische Diisocyanate, z.B. 1,4-Diisocyanatohexan, 1,6-Diisocyanatohexan (HDI), 1,12-Diisocyanatododecan, 1-Isocyanato-3,3,5-trimethyl-5-isocyanatomethylcyclohexan (IPDI), 4,4'-Diisocyanatodicyclohexylmethan, 1,5-Diisocyanato-2,2-dimethylpentan, 1,5-Diisocyanato-2-ethyl-2-propylpentan, 1,6-Diisocyanato-2,4,4-trimethylhexan, 1,5-Diisocyanato-2-methylpentan, zur Herstellung von Polyurethan-Lackrohstoffen wird als Ausgangs-Diisocyanat insbesondere HDI verwendet, eingesetzt.

Die Herstellung der Diisocyanate in der ersten Stufe des erfindungsgemäßen Verfahrens erfolgt nach phosgenfreien Verfahren durch thermische Spaltung der entsprechenden Carbamate. Diese Spaltung wird bei Temperaturen von 150 bis 300°C, meist unter Verwendung von Katalysatoren, durchgeführt. Die bei der Spaltung entstehenden Diisocyanate und Alkohole werden, zumeist durch Destillation, aus dem Reaktionsgemisch entfernt und gereinigt. Derartige Verfahren werden beispielsweise beschrieben in US-A-3 919 279 und EP-B-0 092 738.

Die Oligomerisierung der Diisocyanate in der zweiten Stufe des erfindungsgemäßen Verfahrens wird vorzugsweise bei Temperaturen im Bereich von 0°C bis 100°C unter Durchleiten von Inertgas, vorzugsweise Stickstoff, durchgeführt. Bei niedrigeren Temperaturen ist die Reaktionsgeschwindigkeit zu gering, bei höheren Temperaturen laufen verstärkt Nebenreaktionen ab.

Als Katalysatoren können alle für die Oligomerisierung von aliphatischen und/oder cycloaliphatischen Diisocyanaten geeigneten Katalysatoren eingesetzt werden, beispielsweise Hydroxide oder organische Salze von schwachen Säuren mit Tetraalkylammonium-Gruppen, Hydroxide oder organischen Salze von schwachen Säuren mit Hydroxyalkylammonium-Gruppen, Alkalimetallsalze oder Zinn-, Zink- bzw. Bleisalze von Alkylcarbonsäuren. Die Katalysatoren werden üblicherweise in einer Menge von 0,05 Gew.-% bis 2 Gew.-%, bezogen auf das Diisocyanat, eingesetzt.

Zur Reduzierung der Katalysatormenge ist es möglich, den Diisocyanaten vor der Oligomerisierung in an sich bekannter Weise eine geringe Menge, bis ca. 1 Gewichts-% bezogen auf das Diisocyanat, eines Diols, insbesondere eines Polyesterdiols, zuzusetzen.

Zur Herstellung der Isocyanuratgruppen enthaltenden Polyisocyanate wird das Diisocyanat unter Rühren auf die Reaktionstemperatur gebracht und der Katalysator langsam zugegeben. Zur besseren Handhabung kann der Katalysator in einem Lösungsmittel gelöst werden. Es eignen sich hierzu beispielsweise Alkohole, insbesondere Diole, Ketone, Ether und Ester.

Nach Erreichen des gewünschten Umsetzungsgrades wird die Reaktion durch Desaktivierung des Katalysators, beispielsweise durch Zugabe eines Katalysatorgifts oder durch thermische Zersetzung des Katalysators, gestoppt. Anschließend wird die Reaktionsmischung in geeigneter, an sich bekannter Weise, etwa durch Destillation, beispielsweise mittels Dünnschichtverdampfer, von den monomeren Diisocyanaten befreit.

Die zur erfindungsgemäßen Herstellung der Uretdion- und Isocyanuratgruppen enthaltenden Polyisocyanate benötigten Gehalte an Kohlendioxid im Ausgangsdiisocyanat stellen sich in vielen Fällen bereits durch Herstellung und Lagerung der Diisocyanate ein.

Wenn diese Mengen zur Durchführung des erfindungsgemäßen Verfahrens nicht ausreichen, kann vor der Oligomerisierung zusätzliches Kohlendioxid in das Diisocyanat eingeleitet werden.

Bei zu geringen Gehalten an Kohlendioxid, vergleichbar den in DE-A-38 06 276 geforderten Mengen, werden Oligomerisierungsprodukte mit hohen Farbwerten erhalten, die für die Weiterverabeitung zu Polyurethan-Lacken nicht verwendbar sind.

Daß das erfindungsgemäße Verfahren auf so einfache Weise zu qualitativ hochwertigen Diisocyanat-Oligomerisierungsprodukten führen würde, war überraschend. Der Fachmann mußte vielmehr vermuten, daß durch die hohen Kohlendioxidgehalte der monomeren Diisocyanate entsprechend der Lehre der DE-A-38 06 276 Produkte mit einer erhöhten Farbzahl entstehen würden. Statt dessen lieferten Diisocyanate, die durch phosgenfreie Verfahren hergestellt wurden, bei Anwendung des erfindungsgmäßen Verfahrens Produkte mit einer sehr geringen Farbzahl.

Bei Diisocyanaten, die durch Phosgenierung von Aminen hergestellt wurden, konnte dieser Effekt nicht beobachtet werden. Hier wurden bei Anwesenheit der erfindungsgemäßen Kohlendioxidmengen stark gefärbte Produkte erhalten, die für die Weiterverarbeitung zu Polyurethanlacken nicht geeignet waren.

Durch das erfindungsgemäße Verfahren ist es möglich, mit geringem Aufwand, ohne zusätzliche Verfahrenschritte und ohne den Zusatz von Hilfsstoffen, die durch ihr Verbleiben im Oligomerisierungsprodukt zu Problemen bei der Weiterverarbeitung zu Polyurethan-lacken führen können, Oligomerisierungsprodukte aliphatischer Diisocyanate, insbesondere isocyanuratisiertes HDI, mit niedrigen Farbzahlen herzustellen.

Die Erfindung soll an nachstehenden Beispielen näher erläutert werden:

### Beispiel 1 (Vergleich)

500 g frisch destilliertes und im Vakuum entgastes 1,6-Diisocyanatohexan (nach Phosgenverfahren hergestellt) mit einem CO₂-Gehalt von 12 ppm wurden unter Stickstoffbedeckung auf 80°C aufgeheizt und unter gutem Rühren mit 400 ppm N,N,N-Trimethyl-N-(2-hydroxypropyl)ammonium-2-ethylhexanoat, gelöst in 2 ml Methylethylketon (MEK), versetzt. Bei einem NCO-Gehalt von 40 Gew.-% wurden 2 Moläquivalente (bezogen auf Katalysatormenge) Dibutylphosphat zugegeben und 1 h bei 80°C weitergerührt. Die Farbzahl des Rohproduktes nach DIN 53 409 betrug 43 Hazen.

### Beispiel 2 (Vergleich)

500 g frisch destilliertes und im Vakuum entgastes 1,6-Diisocyanatohexan (nach Phosgenverfahren hergestellt) wurden unter Stickstoffbedeckung auf 80°C aufgeheizt und unter gutem Rühren 3 min mit CO₂ mittels Tauchrohr begast. Der CO₂-Gehalt betrug 123 ppm. Anschließend wurden 400 ppm N,N,N-Trimethyl-N-(2-hydroxypropyl)ammonium-2-ethylhexanoat, gelöst in 2 ml MEK, zugegeben. Bei einem NCO-Gehalt von 40 Gew.-% wurden 2 Moläquivalente (bezogen auf Katalysatormenge) Dibutylphosphat zugegeben und 1 h bei 80°C weitergerührt. Die Farbzahl des Rohproduktes betrug 64 Hazen nach DIN 53409.

### Beispiel 3 (Vergleich)

500 g frisch destilliertes und im Vakuum entgastes 1,6-Diisocyanatohexan (phosgenfrei hergestellt) mit einem CO2-Gehalt von 9 ppm wurden unter Stickstoffbedeckung auf 80°C aufgeheizt und unter gutem Rühren mit 400 ppm N,N,N-Trimethyl-N-(2-hydroxypropyl)ammonium-2-ethylhexanoat, gelöst in 2 ml MEK, versetzt. Bei einem NCO-Gehalt von 40 Gew.-% wurden 2 Moläquivalente (bezogen auf Katalysatormenge) Dibutylphosphat zugegeben und 1 h bei 80°C weitergerührt. Die Farbzahl des Rohproduktes betrug 42 Hazen nach DIN 53409.

### Beispiel 4

500 g frisch destilliertes und im Vakuum entgastes 1,6-Diisocyanatohexan (phosgenfrei hergestellt) wurden unter Stickstoffbedeckung auf 80°C aufgeheizt und unter gutem Rühren 3 min mit CO₂ mittels Tauchrohr begast. Der CO₂-Gehalt betrug 137 ppm. Es wurden 400 ppm N,N,N-Trimethyl-N-(2-hydroxypropyl) ammonium-2-ethylhexanoat, gelöst in 2 ml MEK, zugegeben. Bei einem NCO-Gehalt von 40 Gew.-% wurden 2 Moläquivalente (bezogen auf Katalysatormenge) Dibutylphosphat zugegeben und 1 h bei 80°C weitergerührt. Die Farbzahl des Rohproduktes betrug 12 Hazen nach DIN 53409.

### Beispiel 5

500 g frisch destilliertes und im Vakuum entgastes Hexamethylendiisocyanat (phosgenfrei hergestellt) wurden unter Stickstoffbedeckung auf 80°C aufgeheizt und unter gutem Rühren 6 min mit CO₂ mittels Tauchrohr begast. Der CO₂-Gehalt betrug 337 ppm. Es wurden 400 ppm N,N,N-Trimethyl-N-(2-hydroxypropyl)ammonium-2-ethylhexanoat, gelöst in 2 ml MEK, zugegeben. Bei einem NCO-Gehalt von 40 Gew.-% wurden 2 Moläquivalent (bezogen auf Katalysatormenge) Dibutylphosphat zugegeben und 1 h bei 80°C weitergerührt. Die Farbzahl des Rohproduktes betrug 4 Hazen nach DIN 53409.

### Beispiel 6

Das HDI-Oligomerengemisch nach Beispiel 5 wurde bei 120°C im Dünnschichtverdampfer im Hochvakuum entmonomerisiert. Das resultierende Produkt war für die Anwendung in hochwertigen Polyurethanlacken geeignet. Es wies folgende Kenndaten auf:

| | |
|---|---|
| Viskosität | 1930 mPas (25°C) |
| Farbzahl (Hazen) | 29 (nach DIN 53409) |
| NCO-Gehalt | 22,3 Gew.-% |
| Restmonomergehalt | 0,21 %. |

## Patentansprüche

1. Verfahren zur Herstellung von Isocyanurat- und Uretdiongruppen enthaltenden Polyisocyanatmischungen mit reduzierter Farbzahl dadurch gekennzeichnet, daß in einer ersten Verfahrensstufe aliphatische und/oder cycloaliphatische Diisocyanate durch thermische Spaltung der entsprechenden Carbamate hergestellt werden und in einer zweiten Verfahrensstufe diese Diisocyanate mit einem Kohlendioxidgehalt von 20 bis 500 ppm durch katalytische Oligomerisierung zu Isocyanurat- und Uretdiongruppen enthaltenden Polyisocyanatmischungen umgesetzt werden.

2. Verfahren nach Anspruch 1, dadurch gekennzeichnet, daß das aliphatische und/oder cycloaliphatische Diisocyanat 1,6-Diisocyanathexan ist.

## Claims

1. A process for the preparation of isocyanurate- and uretdione-containing polyisocyanate mixtures having a reduced color number, wherein, in a first process stage, aliphatic and/or cycloaliphatic diisocyanates are prepared by thermal cleavage of the corresponding carbamates and, in a second process stage, these diisocyanates, with a carbon dioxide content of from 20 to 500 ppm are converted into isocyanurate- and uretdione-containing polyisocyanate mixtures by catalytic oligomerization.

2. A process as claimed in claim 1, wherein the aliphatic and/or cycloaliphatic diisocyanate is 1, 6-diisocyanatohexane.

## Revendications

1. Procédé pour la préparation de mélanges de polyisocyanates contenant des groupes isocyanurate et uretdione, à indice de trouble réduit, caractérisé en ce que, dans une première étape opératoire, on prépare des diisocyanates aliphatiques et/ou cycloaliphatiques par élimination par voie thermique des carbamates correspondants et; dans une seconde étape opératoire, on fait réagir ces diisocyanates avec une teneur en dioxyde de carbone de 20 à 500 ppm par oligomérisation catalytique pour obtenir des mélanges de polyisocyanates contenant des groupes isocyanurate et uretdione.

2. Procédé selon la revendication 1, caractérisé en ce que le diisocyanate aliphatique et/ou cycloaliphatique est le 1,6-diisocyanatohexane.
